# EUROPÄISCHE PATENTSCHRIFT

(11) **EP 4 212 840 B1**
(45) Veröffentlichungstag und Bekanntmachung des Hinweises auf die Patenterteilung: **05.03.2025**
(21) Anmeldenummer: 22151701.4
(22) Anmeldetag: 17.01.2022
(51) Int. Cl.: G01K 1/024

(54) **SYSTEM MIT STEUEREINRICHTUNG UND SPEISENTHERMOMETER**
SYSTEM WITH CONTROL DEVICE AND FOOD THERMOMETER
SYSTÈME COMPRENANT UN DISPOSITIF DE COMMANDE ET UN THERMOMÈTRE ALIMENTAIRE

(43) Veröffentlichungstag der Anmeldung: 19.07.2023
(73) Patentinhaber: Vorwerk & Co. Interholding GmbH, 42275 Wuppertal (DE)
(72) Erfinder: STEIN, Dr., Matthias, 45472 Mühlheim an der Ruhr (DE); SCHULZ, Fabian, 46147 Oberhausen (DE); SERNDT, Mirco, 42555 Velbert (DE)
(74) Vertreter: Gille Hrabal Partnerschaftsgesellschaft mbB Patentanwälte

(56) Entgegenhaltungen:
- DE-A1- 102014 217 010
- US-A1- 2018 120 167
- US-A1- 2020 357 260
- US-A1- 2021 298 334

## Beschreibung

Die Erfindung betrifft ein System mit einem elektrischen Speisenthermometer und einer Steuereinrichtung für das Speisenthermometer.

Eine Speise ist eine Nahrung, die aus ein oder mehreren Lebensmitteln zubereitet wird. Die Zubereitung kann das Erwärmen oder Erhitzen umfassen. Die Zubereitung einer Speise umfasst dann die Zufuhr von Wärme zu einem aus ein oder mehreren Lebensmitteln gebildeten Gargut. Beispiele für Lebensmittel bzw. einem aus Lebensmitteln gebildeten Gargut, die durch Erwärmen oder Erhitzen zubereitet werden können, sind Fleisch, Gemüse oder Teig für Backwaren.

Ein Speisenthermometer ist ein Temperaturmessgerät, welches dafür bestimmt und geeignet ist, Temperaturen in einem Nahrungsmittel bzw. Lebensmittel während seiner Zubereitung zu messen. Ein Speisenthermometer kann daher Temperaturen messen, die bei der Zubereitung einer Speise auftreten können. Deutlich davon abweichende Temperaturen können nicht gemessen werden. Außerdem ist ein Speisenthermometer den Umgebungsbedingungen gewachsen, die während einer Zubereitung einer Speise auftreten können.

In der Regel werden bei der Zubereitung einer Speise Temperaturen von weniger als 200°C erreicht. Es können aber auch Temperaturen von 350°C erreicht werden, so zum Beispiel für das Backen einer Pizza. Temperaturen von mehr als 350°C werden grundsätzlich nicht überschritten. Ein Speisenthermometer im Sinne der vorliegenden Erfindung ist daher so eingerichtet, dass Temperaturen oberhalb von 400°C, vorzugsweise oberhalb von 300°C, besonders bevorzugt oberhalb von 250°C, nicht mehr gemessen werden können. Grundsätzlich ist das Speisenthermometer so eingerichtet, dass dieses in einem herkömmlichen Backofen eingesetzt werden kann, also bei Temperaturen von bis zu 250°C oder 220°C.

Ein Speisenthermometer im Sinne der vorliegenden Erfindung ist nicht so ausgelegt, dass sehr tiefe Temperaturen damit gemessen werden können wie zum Beispiel Temperaturen deutlich unterhalb von Minustemperaturen, wie diese in haushaltsüblichen Gefriertruhen oder Gefrierschränken erreicht werden. Ein Speisenthermometer im Sinne der vorliegenden Erfindung ist daher nicht so ausgelegt, dass es Temperaturen von weniger als -70°C messen kann. Grundsätzlich ist ein Speisenthermometer im Sinne der vorliegenden Erfindung so ausgelegt, dass es Temperaturen unterhalb von -50°C nicht mehr messen kann, weil Speisen in der Regel unter Zufuhr von Wärme hergestellt werden und sehr tiefe Temperaturen lediglich für ein Einfrieren einer Speise angewendet werden.

Ein Speisenthermometer im Sinne der vorliegenden Erfindung kann einer Dampfatmosphäre widerstehen. Ein Speisenthermometer ist daher grundsätzlich wasserdicht gekapselt. Ein Speisenthermometer im Sinne der vorliegenden Erfindung ist resistent gegenüber üblichen Zutaten einer Speise wie zum Beispiel Säure von Zitronen oder Essig.

Ein Speisenthermometer kann dafür bestimmt und geeignet sein, in Gargut hineingestochen zu werden, um eine Temperatur im Inneren des Garguts messen zu können. Ein Speisenthermometer kann dafür einen langgestreckten Messfühler mit einem spitzen oder zumindest einem sehr dünnen Ende aufweisen, um den Messfühler auch in relativ feste Nahrung wie Fleisch hineinstechen zu können. Der Messfühler umfasst einen Sensor, mit dem eine Temperatur gemessen werden kann. Ein Speisenthermometer kann ein Griffteil aufweisen, das nicht dafür bestimmt und geeignet ist, in die Speise hineingesteckt zu werden. Das Griffteil kann von einem Benutzer ergriffen werden, um das Speisenthermometer aus einer Nahrung bzw. Speise wieder herausziehen zu können. Das Griffteil kann ebenfalls einen Sensor umfassen, mit dem eine Temperatur gemessen werden kann. Es kann dann auch die Umgebungstemperatur außerhalb einer Nahrung bzw. Speise gemessen werden.

Ein Speisenthermometer im Sinne der vorliegenden Erfindung benötigt für seinen Betrieb elektrischen Strom und ist daher ein elektrisches Speisenthermometer. Das Speisenthermometer kann deshalb eine Batterie umfassen, also einen Speicher für elektrische Energie. Durch den Speicher kann der elektrische Strom zur Verfügung gestellt werden, der für den Betrieb des Speisenthermometers benötigt wird. Die Batterie ist in der Regel eine aufladbare Batterie.

Die Steuereinrichtung für das Speisenthermometer kann das Messen von Temperaturen durch das Speisenthermometer steuern. Die Steuereinrichtung ist daher in der Lage, Steuerbefehle an das Speisenthermometer zu senden. Die Steuereinrichtung kann Bestandteil des Thermometers sein. Die Steuereinrichtung kann ein von dem Speisenthermometer unabhängiges Gerät sein. Es gibt dann keine dauerhafte mechanische Verbindung zwischen der Steuereinrichtung und dem Speisenthermometer. Das Senden von Steuerbefehlen kann dann beispielsweise drahtlos erfolgen.

Die Steuereinrichtung kann Teil eines Küchengeräts sein. Das Küchengerät kann beispielsweise ein Backofen, eine Mikrowelle, ein Dampfgarer, ein Kühlschrank, ein Gefrierschrank oder eine Küchenmaschine sein.

Die Druckschriften US 2018/120167 A1, US 2020/357260 A1, US 2021/298334 A1 und DE 10 2014 217010 A1 offenbaren Systeme für die Zubereitung einer Speise mit einem Temperatursensor. Zeitliche Abstände zwischen Temperaturmessungen können sich in Abhängigkeit von einem Garvorgang ändern.

Mit der vorliegenden Erfindung wird das Ziel verfolgt, den Energiebedarf für den Betrieb des elektrischen Speisenthermometers gering zu halten.

Zur Lösung der Aufgabe dient ein System mit den Merkmalen des ersten Anspruchs. Die abhängigen Ansprüche betreffen vorteilhafte Ausgestaltungen.

Die Steuereinrichtung ist so eingerichtet, dass Abstände zwischen Temperaturmessungen durch das Speisenthermometer in Abhängigkeit von der Zubereitung einer Speise gesteuert werden. Beträgt der Abstand beispielsweise 1 Sekunde, dann beträgt die Messfrequenz bzw. die Abtastrate 1 Hz. Es wird also jede Sekunde eine Temperatur gemessen.

Die Steuereinrichtung umfasst ein Datenverarbeitungsprogramm für das Steuern von Abständen zwischen Temperaturmessungen. Die Steuereinrichtung kann einen Mikroprozessor oder einen Mikrokontroller umfassen. Die Steuereinrichtung kann einen elektronischen Speicher umfassen. In dem Speicher können das Programm und/oder Rezepte für die Zubereitung von Speisen gespeichert sein. Die Steuereinrichtung kann mit einer Funkeinrichtung verbunden sein.

Durch den Abstand zwischen zwei Temperaturmessungen wird eingestellt, wie oft das Speisenthermometer Messungen durchführt. Je kürzer der Abstand ist, um so öfter werden Temperaturmessungen durchgeführt und entsprechend größer sind die Abtastrate sowie der Stromverbrauch des Speisenthermometers. Je größer der Abstand ist, um so seltener werden Temperaturmessungen durchgeführt und entsprechend kleiner ist der Stromverbrauch des Speisenthermometers. Die Häufigkeit von Temperaturmessungen kann an den Bedarf während der Zubereitung einer Speise angepasst werden. Dadurch kann der Stromverbrauch des Speisenthermometers minimiert werden.

Grundsätzlich wird eine jede gemessene Temperatur drahtlos versendet, um die gemessenen Temperaturen auszuwerten und die Zubereitung einer Nahrung zu steuern. Durch die Erfindung kann auch der Stromverbrauch minimiert werden, der für das drahtlose Versenden dann aufgewendet werden muss.

Die Steuereinrichtung kann so eingerichtet sein, dass der Abstand während der Zufuhr von Wärme zu einem Gargut durch die Steuereinrichtung vergrößert wird und zwar insbesondere im Anschluss an eine Startphase. Zu Beginn einer Speisenzubereitung besteht Bedarf, Temperaturen relativ oft zu messen. Es besteht beispielsweise Bedarf, die Leistung einer Heizeinrichtung, über die einem Gargut Wärme zugeführt werden soll, geeignet einzustellen. Um dies schnell erreichen zu können, kann Bedarf bestehen, am Anfang einer Speisenzubereitung, also während einer Startphase, relativ oft eine herrschende Temperatur und folglich relativ viele Ist-Temperaturen zu messen. Es kann auch deshalb Bedarf bestehen, relativ oft zu Beginn einer Speisenzubereitung zu messen, um frühzeitig eine Störung festzustellen. Ist die Leistung der Heizeinrichtung geeignet eingestellt, so wird Gargut längere Zeit lediglich immer weiter erwärmt, ohne dass in den Prozess der Zubereitung eingegriffen werden müsste. Der Bedarf für Temperaturmessungen ist während dieser Zeit gering. Es ist daher dann von Vorteil, den Abstand im Anschluss an eine Startphase zu vergrößern. Dies senkt den Stromverbrauch des elektrischen Speisenthermometers.

Die Steuereinrichtung kann daher vorteilhaft so eingerichtet sein, dass der Abstand für das Speisenthermometer vergrößert wird, sobald eine gemessene Ist-Temperatur von der anfangs gemessenen Start-Temperatur einen vorgebenen Wert entfernt ist. Beispielsweise kann der Abstand vergrößert werden, wenn eine gemessene Ist-Temperatur 2°C bis 10°C, vorzugsweise 3°C bis 7°C, von einer zu Beginn der Speisenzubereitung gemessenen Start-Temperatur entfernt ist. Der Abstand kann dann beispielsweise ausgehend von einem zeitlichen Abstand, der weniger als 10 Sekunden beträgt, auf ein einen zeitlichen Abstand vergrößert werden, der mehr als 10 Sekunden, vorzugsweise mehr als 20 Sekunden, beträgt. Der Abstand zwischen zwei Temperaturmessungen zu Beginn der Speisenzubereitung kann wenigstens zwei oder drei Sekunden lang sein. Es wird dann also alle zwei oder drei Sekunden eine Temperatur gemessen. Der Abstand, der sich an diese Startphase der Speisenzubereitung anschließt, kann auf maximal 60 Sekunden oder maximal 40 Sekunden begrenzt sein. Es werden dann alle 60 Sekunden oder alle 40 Sekunden Temperaturen gemessen.

Nähert sich eine Ist-Temperatur einer vorgegebenen Soll-Temperatur an, so kann Handlungsbedarf bestehen, sobald die Ist-Temperatur die vorgegebene Soll-Temperatur erreicht. Um zu vermeiden, dass die Ist-Temperatur die vorgegebene Soll-Temperatur nicht oder zumindest kaum überschreitet, kann relativ oft die Temperatur durch das Speisenthermometer gemessen werden, sobald die Ist-Temperatur von der Soll-Temperatur nicht mehr weit entfernt ist. Daher ist es vorteilhaft, den Abstand während der Zufuhr von Wärme zu einem Gargut durch die Steuereinrichtung zwar zunächst vergrößern, aber schließlich auch wieder zu verkleinern. Zumindest ist die Steuereinrichtung vorteilhaft so eingerichtet, dass der Abstand während der Zufuhr von Wärme zu einem Gargut durch die Steuereinrichtung verkleinert wird, wenn gemessene Ist-Temperaturen sich einem vorgegebenen Sollwert annähern. Der Abstand des Speisenthermometers während der Zufuhr von Wärme zu einem Gargut wird dann also gegen Ende der Garzeit durch die Steuereinrichtung verkleinert.

Die Steuereinrichtung kann daher vorteilhaft so eingerichtet sein, dass der Abstand für das Speisenthermometer verkleinert wird, sobald eine gemessene Ist-Temperatur nur noch 2°C bis 10°C, vorzugsweise nur noch 3°C bis 7°C, von einer vorgegebenen Soll-Temperatur entfernt ist. Der Abstand kann dann beispielsweise von einem Wert, der beispielsweise zwischen 15 Sekunden und 60 Sekunden liegt, auf einen Wert verkleinert werden, der beispielsweise zwischen 1 bis 10 Sekunden, vorzugsweise zwischen 2 bis 5 Sekunden, liegt.

Da das genaue Erreichen der Soll-Temperatur für das Gelingen einer Speise regelmäßig besonders wichtig ist, kann der Abstand in dieser Endphase der Speisenzubereitung am kürzesten sein. Es gab dann während der Zubereitung einer Speise keinen Abstand, der kürzer gewesen wäre.

Ist es für die Zubereitung der Speise erforderlich, dass nach Erreichen der Soll-Temperatur die Soll-Temperatur sehr genau für eine vorgegebene Zeit gehalten wird, so kann es zweckmäßig sein, dass das Speisenthermometer auch nach dem Erreichen der Soll-Temperatur das Messen von Temperaturen fortsetzt. Es kann zweckmäßig sein, dass auch nach dem Erreichen der Soll-Temperatur der Abstand kurz bleibt und also beispielsweise nicht mehr verändert wird.

Lediglich während der anspruchsgemäßen Initialisierungsphase nach dem Start bzw. Einschalten eines Speisenthermometers kann es einen noch kürzeren Abstand gegeben haben. Der noch kürzere Abstand ist aber dann nicht dazu gedacht, Messungen für eine Speisenzubereitung durchzuführen. Der noch kürzere Abstand kann stattdessen vorgesehen sein, um so schnell wie möglich einen einsatzbereiten Zustand des Speisenthermometers zu erreichen. Der noch kürzere Abstand kann beispielsweise 0,1 bis 3 Sekunden oder 0,5 bis 2 Sekunden lang sein. Die Steuereinrichtung kann daher so eingerichtet sein, dass durch das Speisenthermometer im Anschluss an ein Einschalten des Speisenthermometers der Abstand zwischen Temperaturmessungen zunächst kurz ist und der Abstand zwischen Temperaturmessungen danach größer ist. Der größere Abstand im Anschluss an die Initialisierungsphase kann wenigstens zwei oder drei Sekunden lang sein.

Die Steuereinrichtung kann so eingerichtet sein, dass diese einen Abstand für Temperaturmessungen in Abhängigkeit von einer gemessenen Ist-Temperatur sowie einer Soll-Temperatur und/oder Starttemperatur festlegt. Sind Soll-Temperatur und Starttemperatur relativ weit entfernt, so können während einer Phase, die zwischen einer Startphase und einer Endphase liegt, besonders lange Abstände für Temperaturen von beispielsweise wenigstens 30 Sekunden oder 40 Sekunden vorgesehen sein. Soll-Temperatur und Starttemperatur sind beispielsweise dann relativ weit entfernt, wenn die Differenz zwischen Soll-Temperatur und Starttemperatur wenigstens 40°C, vorzugsweise wenigstens 60°C, beträgt. Mit Endphase ist eine Phase gegen Ende einer Garzeit gemeint.

Es hat sich als zweckmäßig herausgestellt, dass die Steuereinrichtung Differenzen zwischen gemessener Ist-Temperatur und Starttemperatur und/oder Soll-Temperatur analysiert und in Abhängigkeit davon die Länge des Abstands steuert, um so den Energieverbrauch des Speisenthermometers besonders gering zu halten.

Beispielsweise kann die Steuereinrichtung die Differenz zwischen einer gemessenen Ist-Temperatur und einer gemessenen Starttemperatur bilden. Ist diese Differenz gleich oder größer als die durch eine Zahl X geteilte Differenz zwischen der Soll-Temperatur und der Starttemperatur, so wird der Abstand vergrößert. X kann eine positive Zahl größer als 1, vorzugsweise größer als 2, besonders bevorzugt größer als 5 sein. X ist vorzugsweise kleiner als 20 oder kleiner als 15. Die Zahl X und/oder die Solltemperatur können in einem elektronisch gespeicherten Rezept für die Steuereinrichtung hinterlegt sein. Die Zahl X kann ein Maß für die Zeit sein, die für das Zuführen von Wärme zu dem Gargut gemäß Rezept vorgesehen ist. Die Zahl X kann ein Maß für die Zeit sein, die für das Erwärmen von Gargut bis zum Erreichen einer Soll-Temperatur gemäß Rezept vorgesehen ist. Es wird dadurch dann die zur Verfügung stehende Zeit für das Einstellen von Abständen vorteilhaft berücksichtigt.

Beispielsweise kann die Steuereinrichtung die Differenz zwischen einer Soll-Temperatur und einer gemessenen Ist-Temperatur bilden. Ist diese Differenz gleich oder kleiner als die durch eine Zahl X geteilte Differenz zwischen der Soll-Temperatur und der Starttemperatur, so wird der Abstand verkleinert. X ist eine positive Zahl, die größer als 1 vorzugsweise größer als 2, besonders bevorzugt größer als 5 sein kann. X ist vorzugsweise kleiner als 20 oder kleiner als 15. Die Zahl X und/oder die Solltemperatur können in einem elektronisch gespeicherten Rezept für die Steuereinrichtung hinterlegt sein.

Die Zahl X kann aber auch in der Steuereinrichtung hinterlegt sein. Die Zahl X kann also von einem Rezept abhängen oder aber fest vorgegeben sein. Zu bevorzugen ist eine Abhängigkeit vom Rezept, um besonders gute Garergebnisse erzielen zu können.

Abstände zwischen Startphase und Endphase können zunächst stufenförmig vergrößert und/oder danach stufenförmig verkleinert werden. Es ist also beispielsweise möglich, dass ein Abstand in der Startphase zunächst 2 bis 8 Sekunden lang ist, danach zunächst auf 8 Sekunden bis 15 Sekunden und danach auf 15 Sekunden bis 60 Sekunden vergrößert wird. Im Anschluss an die Vergrößerung des Abstands auf 15 Sekunden bis 60 Sekunden kann der Abstand bis zum Erreichen der Endphase auf 8 Sekunden bis 15 Sekunden verkleinert werden, um bei Erreichen der Endphase dann weiter verkleinert zu werden. Abstände zwischen Startphase und Endphase können aber auch kontinuierlich oder zumindest quasikontinuierlich vergrößert und/oder verkleinert werden.

Die Steuereinrichtung kann so eingerichtet sein, dass diese auf ein elektronisch gespeichertes Rezept zugreifen und die Soll-Temperatur dem elektronisch gespeicherten Rezept entnehmen kann. Das Rezept kann so sein, dass ein Benutzer mithilfe der Steuereinrichtung Schritt für Schritt angeleitet wird, welche Maßnahmen er wann und wie zu ergreifen hat, um eine gewünschte Speise zuzubereiten. Das Rezept kann so sein, dass ein oder mehrere Küchengeräte mithilfe der Steuereinrichtung schrittweise so gesteuert werden, dass mithilfe der ein oder mehreren Küchengeräte eine gewünschte Speise zubereitet werden kann.

In einer Ausgestaltung sind ein oder mehrere Abstände in dem elektronisch gespeicherten Rezept angegeben. Die Steuereinrichtung kann dann die ein oder mehrere Abstände dem Rezept entnehmen und die Abstände entsprechend steuern. Zum Beispiel kann sich das Rezept auf die Herstellung eines Brots beziehen und eine Backdauer von 60 Minuten vorsehen. In dem Rezept kann dann gespeichert sein, dass der Abstand in den ersten 15 Minuten 5 Sekunden betragen soll. Nach Ablauf der ersten 15 Minuten soll der Abstand dann laut Rezept beispielsweise eine halbe Stunde lang 10 Sekunden betragen. Die letzten 15 Minuten soll der Abstand gemäß Rezept beispielsweise 8 Sekunden betragen. Die Steuerungseinrichtung stellt die Abstände dann gemäß den im Rezept hinterlegten Werten während des Backens ein.

Die Steuereinrichtung kann so eingerichtet sein, dass diese einen Abstand vergrößert, sobald das Speisenthermometer in ein Gargut hineingesteckt worden ist. Die Steuereinrichtung kann so eingerichtet sein, dass diese das Hineinstecken des Speisenthermometers in ein Gargut automatisiert erkennen kann. Das Hineinstecken des Speisenthermometers in ein Gargut kann beispielsweise aufgrund einer sprunghaften Temperaturänderung automatisiert erkannt werden. Sind Temperatursensoren beim Speisenthermometer so angeordnet, dass Temperaturen sowohl außerhalb als auch innerhalb eines Garguts gemessen werden können, so kann das sprunghafte Auftreten einer Temperaturdifferenz zwischen den Temperatursensoren für ein automatisiertes Erkennen genutzt werden. Das automatisierte Erkennen kann mithilfe einer Kamera geschehen. Im Anschluss an ein Hineinstecken des Speisenthermometers in ein Gargut kann alternativ oder ergänzend dieses Hineinstecken der Steuereinrichtung mitgeteilt werden, indem ein Benutzer ein entsprechendes Bedienelement betätigt. Der Benutzer kann zum Beispiel im Anschluss an eine von der Steuereinrichtung gesteuerte Aufforderung, das Hineinstecken des Speisenthermometers in ein Gargut zu bestätigen, das Bedienelement betätigen.

Die Steuereinrichtung kann so eingerichtet sein, dass die Messung von Temperaturen durch das Speisenthermometer beendet wird, wenn eine gemessene Ist-Temperatur wenigstens gleich groß wie eine von der Steuereinrichtung ermittelte Soll-Temperatur ist. Wird die Soll-Temperatur erreicht, so kann die Zubereitung beendet sein. Dies kann ein Grund sein, warum die Messung von Temperaturen durch das Speisenthermometer beendet wird. Die Steuereinrichtung kann dann ergänzend so eingerichtet sein, dass diese die Heizeinrichtung ausschaltet, mit der Wärme dem Gargut zugeführt worden ist. Wird die Soll-Temperatur erreicht, so kann es erforderlich sein, das Gargut für eine vorgegebene Zeit auf der Soll-Temperatur zu halten. Es kann dann beispielsweise deshalb auf das Messen mithilfe des Speisenthermometers verzichtet werden, weil das zugehörige Küchengerät in der Lage ist, selbständig eine zugehörige Innenraumtemperatur auf einem dafür erforderlichen Wert zu halten.

Ist die Temperatur eines Garguts während seiner Zubereitung vorrübergehend auf einer vorgegebenen Temperatur zu halten, so kann der Abstand in dieser Zeit kleiner sein als ein früherer und/oder späterer Abstand während der Zufuhr von Wärme zu dem Gargut. Es kann so sichergestellt werden, dass die vorgegebene Temperatur genau eingehalten wird. Davor oder danach kann es Phasen geben, in denen lediglich längere Zeit aufgewärmt oder abgekühlt wird. Daher können dann auch Abstände länger bzw. größer sein.

Die Steuereinrichtung kann so eingerichtet sein, dass diese aus mehreren Temperaturmessungen für jeden Temperatursensor des Speisenthermometers einen Mittelwert bildet. Es können so Fehler aufgrund von Messungenauigkeiten vermieden werden.

Die Steuereinrichtung kann so eingerichtet sein, dass der Energieverbrauch des Speisenthermometers zwischen zwei Messungen minimiert wird. Beispielsweise kann das Speisenthermometer ein Funkeinheit umfassen, die periodisch Funksignale versendet. Das Versenden von Funksignalen kann dann reduziert werden, um den Energieverbrauch des Speisenthermometers zwischen zwei Messungen weiter zu minimieren. Es kann also zwischen zwei Messungen der Energieverbrauch von Sekundärverbrauchern wie Funkeinheit reduziert werden und zwar gesteuert durch die Steuereinrichtung.

Die Steuereinrichtung kann so eingerichtet sein, dass diese die Zufuhr von Wärme zu einem Gargut steuert. Die Steuereinrichtung kann also beispielsweise die Heizleistung eines Backofens steuern, in dem eine Speise zubereitet wird. Die Zufuhr von Wärme kann in Abhängigkeit von den Temperaturen gesteuert werden, die mithilfe des Speisenthermometers gemessen werden. Beispielsweise kann die Steuereinrichtung so eingerichtet sein, dass die Heizleistung groß ist, wenn gemessene Ist-Temperaturen von einer Soll-Temperatur weit entfernt sind. Beispielsweise kann die Steuereinrichtung so eingerichtet sein, dass die Heizleistung verringert wird, wenn gemessene Ist-Temperaturen von einer Soll-Temperatur nicht mehr weit entfernt sind.

Nachfolgend wird die Erfindung mithilfe von Figuren näher erläutert. Es zeigen:
- Figur 1:: Speisenthermometer während einer Speisenzubereitung;
- Figur 2:: Küchenmaschine;
- Figur 3:: Ablaufdiagramm für eine Zubereitung einer Speise;
- Figur 4:: Ablaufdiagramm für eine Zubereitung eines Steaks.

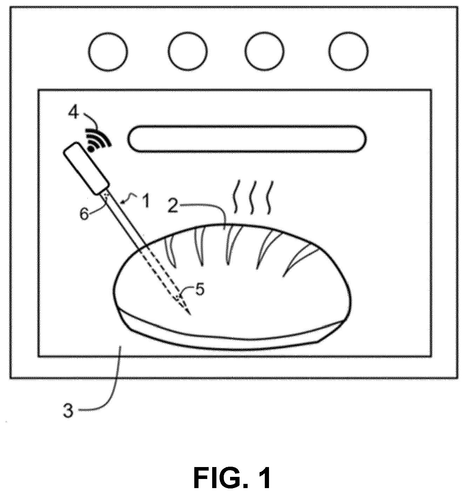

Die Figur 1 zeigt ein stiftförmiges Speisenthermometer 1, welches mit seiner Spitze in einen Brotteig 2 hineingesteckt ist. Der Brotteig 2 befindet sich in einem Küchengerät. Das Küchengerät ist ein Backofen 3. Der Brotteig 2 wird im Backofen 3 erhitzt. Das Speisenthermometer 1 bestimmt räumlich aufgelöst Temperaturen im Backofen 3, die mithilfe von zwei Temperatursensoren 5 und 6 sowohl außerhalb des Brotteigs 2 als auch innerhalb des Brotteigs 2 ermittelt werden. Diese ermittelten Temperaturen werden durch eine Funkeinheit 4 an eine externe Steuereinrichtung gesendet. Durch die Steuereinrichtung wird die Brotzubereitung gesteuert. Dies kann durch eine unmittelbare Steuerung der Temperatur des Backofens 3 geschehen oder aber durch Anweisungen an einen Benutzer, wie die Temperatur des Backofens 3, die Art der Temperaturzuführung und / oder die Anordnung des Brotteigs 2 innerhalb des Backofens 3 zu verändern ist. Mit Art der Temperaturzuführung sind Auswahlmöglichkeiten wie Oberhitze, Unterhitze oder Umluft gemeint. Mit Anordnung ist gemeint, wo im Backofen 3 sich der Brotteig 2 befinden soll.

Eine Batterie des Speisenthermometers 1 ist vorzugweise bei der Spitze angeordnet, um die Batterie vor übermäßiger Wärme zu schützen.

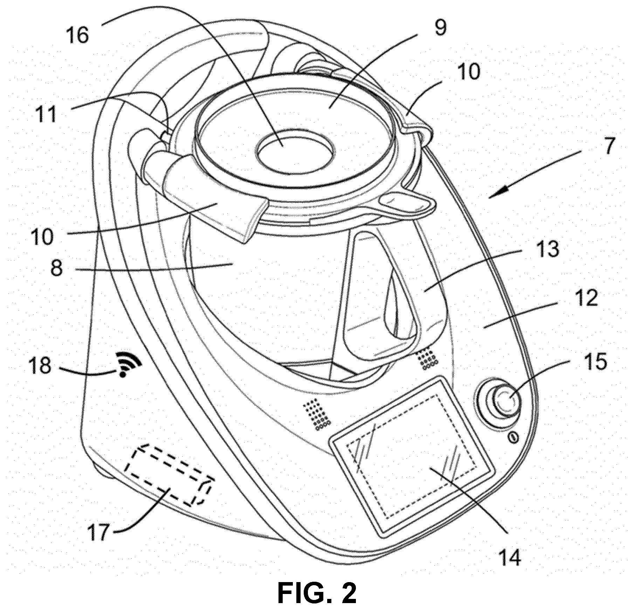

Die Figur 2 zeigt eine Küchenmaschine 7 mit einem Speisenzubereitungsgefäß 8. Auf dem Speisenzubereitungsgefäß 8 ist ein Deckelteil 9 aufgesetzt. Das Deckelteil 9 für das Speisenzubereitungsgefäß 8 ist durch armartige Verriegelungselemente, also Arme 10, verriegelt. Das Deckelteil 9 befindet sich zwischen den beiden Armen 10. Die Arme 10 können um ihre Längsachse motorisiert gedreht werden und so hin und her zwischen einer Öffnungsstellung und einer Verriegelungsstellung. Das Deckelteil 9 hat einen Sensor und zwar einen Kipphebel 11 eines elektrischen Schalters heruntergedrückt und so ausgelöst. Die armartigen Verriegelungselemente 10 und der Kipphebel 11 sind an einem Standteil 12 der Küchenmaschine 7 angebracht. Dass Speisenzubereitungsgefäß 8 ist in das Standteil 12 eingesetzt und kann aus dem Standteil 12 herausgenommen werden. Um das Speisenzubereitungsgefäß 8 herausnehmen zu können, umfasst dieses einen Griff 13. Das Standteil 12 umfasst zur Bedienung ein berührungsempfindliches Display 14 und einen Drehschalter 15. Der Drehschalter 15 kann gedreht und gedrückt werden. Display 14 und Drehschalter 15 sind also Bedienelemente der Küchenmaschine 7. Das Deckelteil 9 umfasst mittig eine Öffnung 16, die mit einem gefäßartigen Verschluss verschlossen werden kann.

Im Standteil 12 befindet sich eine Steuereinrichtung 17. Über die Bedienelemente 14 und 15 können Daten in die Steuereinrichtung eingegeben werden. Im Standteil 12 befindet sich eine Funkeinheit 18, über die Daten drahtlos gesendet und empfangen werden können. Über die Funkeinheit 18 kann die Steuereinrichtung 17 auf ein extern gespeichertes Rezept zugreifen. Im Anschluss daran kann die Steuereinrichtung 17 mithilfe des Rezepts die Zubereitung einer Speise steuern. Über die Funkeinheit 18 kann die Steuereinrichtung 17 mit dem Speisenthermometer 1 drahtlos Daten austauschen, also kommunizieren. Als Protokolle der Funkeinheit sind beispielsweise Bluetooth und/oder Wifi geeignet. Rezepte können aber auch in einer Speichereinheit der Steuereinrichtung alternativ oder ergänzend gespeichert sein.

Im Speisenzubereitungsgefäß 8 befindet sich ein Schneidwerkzeug, das mit einem Motor angetrieben werden kann. Der Motor befindet sich im Standteil 12. Im Grund des Speisenzubereitungsgefäßes 8 ist eine Heizeinrichtung vorhanden, die mit dem Standteil 12 für ein Erhitzen stromleitend verbunden werden kann.

Die Steuereinrichtung 17 der Küchenmaschine 7 kann ein Rezept für die Zubereitung eines Brots erhalten haben. Die Steuereinrichtung 17 kann die Zubereitung des Brotteigs 2 gesteuert haben. Der Brotteig 2 muss nun geeignet im Backofen 3 erhitzt werden. Dies kann nun durch die Steuereinrichtung 17 gesteuert werden.

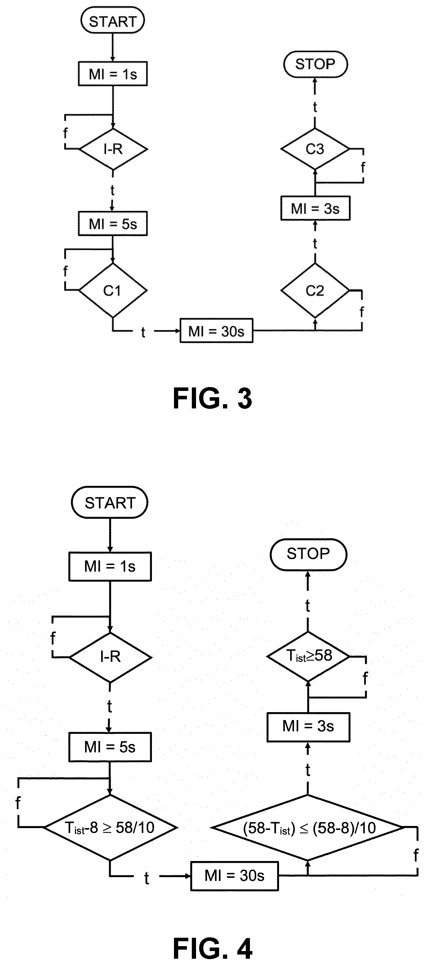

Die Figur 3 zeigt ein mögliches Ablaufdiagramm für das Erhitzen des Brotteig 2 durch den Backofen 3 mithilfe des Speisenthermometers 1.

Nach dem Einschalten des Speisenthermometers 1 initialisiert sich dieses zunächst so, dass der Abstand MI zum Beispiel eine Sekunde beträgt. Jede Sekunde werden dann also durch zumindest einen oder durch beide Temperatursensoren 5, 6 Temperaturen gemessen. Erfindungsgemäß wird durch das Initialisieren eine Funkverbindung zwischen der Steuereinrichtung 17 und dem Speisenthermometer 1 hergestellt. Die Funkverbindung kann eine Bluetooth - Verbindung sein.

Die Steuereinrichtung 17 prüft im Anschluss daran gemäß Schritt I-R, ob ein Rezept vorliegt. Die Steuereinrichtung 17 kann ergänzend prüfen, ob ein vorliegendes Rezept so weit abgearbeitet ist, dass nun der Brotteig 2 erhitzt, also gebacken, werden muss. Der Brotteig ist dann ein Gargut im Sinne der vorliegenden Erfindung. Ist das Ergebnis so, dass kein Rezept vorliegt und/oder noch nicht hinreichend weit abgearbeitet worden ist, so ist das Ergebnis "false", was in der Figur 3 durch ein "f" dargestellt wird. In diesem Fall wiederholt die Steuereinrichtung die Prüfung gemäß Schritt I-R. Ist das Ergebnis so, dass ein Rezept vorliegt und hinreichend weit abgearbeitet worden ist, so ist das Ergebnis "true", was in der Figur 3 durch ein "t" dargestellt wird. Die Steuereinrichtung 17 erhöht nun den Abstand MI auf beispielsweise 5 Sekunden. Die Steuereinrichtung 17 kann außerdem einen Benutzer optisch und/oder akustisch anleiten, dass das Speisenthermometer 1 wie in der Figur 1 gezeigt in den Brotteig 2 hineinzustecken und der Brotteig 2 in den Backofen 3 hineinzustellen ist. Die Steuereinrichtung kann alternativ den Abstand MI auf zum Beispiel 5 Sekunden erhöhen, sobald der Benutzer durch Betätigen eines Bedienelements 14, 15 bestätigt hat, dass der Benutzer das Speisenthermometer 1 wie in der Figur 1 gezeigt in den Brotteig 2 hineingesteckt und den Brotteig 2 in den Backofen 3 hineingestellt hat.

Die Steuereinrichtung 17 führt nun wie im Ablaufdiagramm angedeutet eine Prüfung C1 durch. Die Prüfung kann umfassen, ob eine während des Erhitzens gemessene Temperatur, also eine Ist-Temperatur Tᵢₛₜ, oberhalb einer ersten Temperatur T₁ liegt, die durch das Rezept vorgegeben worden ist. Die gemessene Temperatur ist insbesondere die Temperatur, die durch den beim spitzen Ende des Speisenthermometers 1 angeordneten Temperatursensor 5 gemessen wird und damit die Temperatur, die im Inneren des Brotteigs 2 gemessen wird. Die gemessene Temperatur kann aber auch die Temperatur sein, die durch den anderen Temperatursensor 6 außerhalb des Brotteigs 2 gemessen wird. Ist die gemessene Temperatur geringer als die durch das Rezept vorgegebene Temperatur, so ist das Ergebnis der Prüfung "false". Wie im Ablaufdiagramm im Schritt C1 durch "f" gezeigt, wird die Prüfung wiederholt. Ist das Ergebnis "true", so wird der Abstand MI vergrößert, so zum Beispiel auf 30 Sekunden.

Die Prüfung gemäß C1 kann alternativ Temperaturdifferenzen analysieren. So kann die Prüfung umfassen, dass der Unterschied zwischen einer anfänglich gemessenen Starttemperatur Tₛₜₐᵣₜ und einer Ist-Temperatur Tᵢₛₜ ermittelt wird, also (Tᵢₛₜ - Tₛₜₐᵣₜ). Die Prüfung kann umfassen, dass der Unterschied zwischen einer anfänglich gemessenen Starttemperatur Tₛₜₐᵣₜ und einer Soll-Temperatur Tₛₒₗₗ ermittelt wird, also (Tₛₒₗₗ - Tₛₜₐᵣₜ). Die Soll-Temperatur Tₛₒₗₗ kann eine Temperatur sein, die durch das Rezept vorgegeben wird.

Die Prüfung kann umfassen, ob (Tᵢₛₜ - Tₛₜₐᵣₜ) ≥ (Tₛₒₗₗ - Tₛₜₐᵣₜ)/X erfüllt ist, wobei X beispielsweise eine durch das Rezept vorgegebene positive Zahl sein kann, die größer als 1 sein kann. Ist (Tᵢₛₜ - Tₛₜₐᵣₜ) ≥ (Tₛₒₗₗ - Tₛₜₐᵣₜ)/X erfüllt, so ist das Ergebnis "true" und der Abstand MI wird vergrößert, also im Fall des in der Figur 3 gezeigten Ablaufdiagramms auf 30 Sekunden. Andernfalls ist das Ergebnis "false" und die Prüfung wird wiederholt, beispielsweise sobald eine neue IST-Temperatur Tᵢₛₜ gemessen worden ist.

Ist der Abstand weiter vergrößert worden, also beispielsweise auf 30 Sekunden, so führt die Steuereinrichtung 17 eine Prüfung C2 durch. Die Prüfung kann erneut umfassen, ob eine gemessene Temperatur, also eine Ist-Temperatur Tᵢₛₜ, oberhalb einer zweiten Temperatur T₂ liegt, die durch das Rezept vorgegeben worden ist.

Die Prüfung C2 kann alternativ Temperaturdifferenzen analysieren. So kann die Prüfung umfassen, dass der Unterschied zwischen einer Soll-Temperatur Tₛₒₗₗ und einer jeweils gemessenen Ist-Temperatur Tᵢₛₜ ermittelt wird, also (Tₛₒₗₗ - Tᵢₛₜ). Die Prüfung kann umfassen, dass der Unterschied zwischen der anfänglich gemessenen Starttemperatur Tₛₜₐᵣₜ und der Soll-Temperatur Tₛₒₗₗ ermittelt wird, also (Tₛₒₗₗ - Tₛₜₐᵣₜ).

Die Prüfung kann umfassen, ob (Tₛₒₗₗ - Tᵢₛₜ) ≤ (Tₛₒₗₗ - Tₛₜₐᵣₜ)/X erfüllt ist. Ist (Tₛₒₗₗ - Tᵢₛₜ) ≤ (Tₛₒₗₗ - Tₛₜₐᵣₜ)/X erfüllt, so ist das Ergebnis "true" und der Abstand MI wird verkleinert, also im Fall des in der Figur 3 gezeigten Ablaufdiagramms auf 3 Sekunden. Andernfalls ist das Ergebnis "false" und die Prüfung wird wiederholt, beispielsweise sobald eine neue IST-Temperatur Tᵢₛₜ gemessen worden ist.

Ist der Abstand MI verkleinert worden, so führt die Steuereinrichtung eine Prüfung C3 durch. Geprüft wird, ob die jeweils gemessene Ist-Temperatur gleich der Soll-Temperatur ist oder größer, ob also Tᵢₛₜ ≥ Tₛₒₗₗ ist. Ist die jeweils gemessene Ist-Temperatur gleich oder größer der Soll-Temperatur, so wird das Messen von Temperaturen durch das Speisenthermometer gestoppt. Außerdem ist es möglich, dass dann die Steuereinrichtung 17 die Heizeinrichtung des Backofens 3 abschaltet.

Das in der Figur 3 gezeigte Ablaufdiagramm kann auch für die Zubereitung von anderen Speisen angewendet werden. Beispielsweise im Fall der Zubereitung eines Steaks für die Zubereitungsart "medium" kann die Soll-Temperatur 58°C sein, die im Inneren des Steaks erreicht werden soll. Damit ist Tₛₒₗₗ = 58°C. Diese Angabe kann die Steuereinrichtung 17 durch ein elektronisch gespeichertes Rezept erhalten haben. Das Steak kann aus dem Kühlschrank geholt worden sein. Nachdem das Speisenthermometer 1 in das Steak hineingesteckt worden ist, kann das Speisenthermometer 1 im Inneren des Steaks eine Temperatur von 8°C gemessen haben. Tᵢₛₜ ist also am Anfang 8°C. Diese Temperatur von 8°C ist die Starttemperatur Tₛₜₐᵣₜ.

Ist der Abstand MI, mit der Temperaturen durch das Speisenthermometer 1 gemessen werden, von 1 Sekunde auf 5 Sekunden gemäß Ablaufdiagramm der Figur 4 erhöht worden, so prüft die Steuereinrichtung 17 für die Steakzubereitung im Anschluss daran, ob Tᵢₛₜ-8 ≥ 58/X erfüllt ist. Durch das Rezept kann vorgegeben worden sein, dass X=10 ist. Die Steuereinrichtung 17 prüft dann wie im Ablaufdiagramm der Figur 4 dargestellt, ob Tᵢₛₜ-8 ≥ 58/10 bzw. ob Tᵢₛₜ ≥ 13,8. Misst das Speisenthermometer 1 eine Temperatur von mehr als 13,8°C, so erhöht die Steuereinrichtung 17 den Abstand des Speisenthermometers 1 auf 30 Sekunden. Im Anschluss daran prüft die Steuereinrichtung 17, ob die Gleichung (58-Tᵢₛₜ) ≤ (58-8)/10 erfüllt ist und folglich, ob Tᵢₛₜ ≤ 53 ist. Wird durch das Speisenthermometer 1 eine Ist-Temperatur von mehr als 53°C gemessen, so wird der Abstand MI auf drei Sekunden verkleinert. Die Steuereinrichtung prüft nun, ob die durch das Speisenthermometer 1 im Inneren des Steaks gemessene Temperatur 58°C erreicht oder überschritten hat. Sobald das Speisenthermometer 1 mithilfe seines Temperatursensors 5 eine Temperatur von wenigstes 58°C misst, wird das Messen von Temperaturen gestoppt. Das Steak ist fertig zubereitet und kann gegessen werden.

## Patentansprüche

1. System mit einem Speisenthermometer (1) und mit einer Steuereinrichtung (17) für das Speisenthermometer (1), die das Messen von Temperaturen durch das Speisenthermometer (1) steuern kann, wobei die Steuereinrichtung (17) so eingerichtet ist, dass ein Abstand (MI) zwischen Temperaturmessungen durch das Speisenthermometer (1) in Abhängigkeit von der Zubereitung einer Speise (2) gesteuert wird, **dadurch gekennzeichnet, dass** die Steuereinrichtung (17) so eingerichtet ist, dass im Anschluss an ein Einschalten des Speisenthermometers (1) der Abstand (MI) zwischen Temperaturmessungen während einer Initialisierungsphase klein ist und der Abstand (MI) zwischen Temperaturmessungen nach der Initialisierungsphase größer ist, wobei während der Initialisierungsphase eine Funkverbindung zwischen der Steuereinrichtung (17) und dem Speisenthermometer (1) hergestellt wird.

2. System nach dem vorhergehenden Anspruch, **dadurch gekennzeichnet, dass** die Steuereinrichtung (17) so eingerichtet ist, dass der Abstand (MI) während der Zufuhr von Wärme zu einem Gargut (2) im Anschluss an eine Startphase durch die Steuereinrichtung (17) vergrößert wird.

3. System nach dem vorhergehenden Anspruch, **dadurch gekennzeichnet, dass** die Steuereinrichtung (17) so eingerichtet ist, dass der Abstand (MI) während der Zufuhr von Wärme zu einem Gargut (2) durch die Steuereinrichtung (17) nach dem Vergrößern des Abstands (MI) schließlich wieder verkleinert wird.

4. System nach einem der vorhergehenden Ansprüche, **dadurch gekennzeichnet, dass** die Steuereinrichtung (17) so eingerichtet ist, dass der Abstand (MI) während der Zufuhr von Wärme zu einem Gargut (2) gegen Ende der Garzeit durch die Steuereinrichtung (17) verkleinert wird.

5. System nach einem der vorhergehenden Ansprüche, **dadurch gekennzeichnet, dass** die Steuereinrichtung (17) so eingerichtet ist, dass während der Zubereitung einer Speise ein kurzer Abstand (MI) 1 bis 10 Sekunden lang ist und ein großer Abstand 10 bis 60 Sekunden lang ist.

6. System nach einem der vorhergehenden Ansprüche, **dadurch gekennzeichnet, dass** die Steuereinrichtung (17) so eingerichtet ist, dass diese einen Abstand (MI) in Abhängigkeit von einer gemessenen Ist-Temperatur sowie einer Soll-Temperatur und/oder Starttemperatur festlegt.

7. System nach dem vorhergehenden Anspruch, **dadurch gekennzeichnet, dass** die Steuereinrichtung (17) Differenzen zwischen gemessener Ist-Temperatur und Starttemperatur und/oder Soll-Temperatur analysiert und in Abhängigkeit davon die Größe des Abstands (MI) steuert.

8. System nach dem vorhergehenden Anspruch, **dadurch gekennzeichnet, dass** die Steuereinrichtung (17) so eingerichtet ist, dass diese den Abstand (MI) vergrößert, wenn (Tᵢₛₜ - Tₛₜₐᵣₜ) ≥ (Tₛₒₗₗ - Tₛₜₐᵣₜ)/X und/oder den Abstand (MI) verkleinert, wenn (Tₛₒₗₗ - Tᵢₛₜ) ≤ (Tₛₒₗₗ - Tₛₜₐₙ)/X, wobei Tᵢₛₜ die Ist-Temperatur ist, Tₛₒₗₗ die SollTemperatur ist, Tₛₜₐᵣₜ eine Temperatur im Gargut vor der Zufuhr von Wärme zum Gargut ist und X eine Zahl größer als 1 ist.

9. System nach einem der vorhergehenden Ansprüche, **dadurch gekennzeichnet, dass** die Steuereinrichtung (17) so eingerichtet ist, dass diese auf ein elektronisch gespeichertes Rezept zugreifen kann und eine Soll-Temperatur dem elektronisch gespeicherten Rezept entnehmen kann.

10. System nach dem vorhergehenden Anspruch, **dadurch gekennzeichnet, dass** die Steuereinrichtung (17) so eingerichtet ist, dass diese auf das elektronisch gespeicherte Rezept zugreifen kann und ein oder mehrere Abstände dem elektronisch gespeicherten Rezept entnehmen kann.

11. System nach einem der vorhergehenden Ansprüche, **dadurch gekennzeichnet, dass** die Steuereinrichtung (17) so eingerichtet ist, dass die Messung von Temperaturen durch das Speisenthermometer (1) beendet wird, wenn eine gemessene Ist-Temperatur wenigstens gleich groß wie eine von der Steuereinrichtung (17) ermittelte Soll-Temperatur ist.

12. System nach einem der vorhergehenden Ansprüche, **dadurch gekennzeichnet, dass** die Steuereinrichtung (17) so eingerichtet ist, dass diese aus mehreren Temperaturmessungen für zumindest einen Temperatursensor (5, 6) des Speisenthermometers (1) einen Mittelwert bildet.

13. System nach einem der vorhergehenden Ansprüche, **dadurch gekennzeichnet, dass** die Steuereinrichtung (17) so eingerichtet ist, dass der Energieverbrauch des Speisenthermometers (1) zwischen zwei Messungen durch Reduzieren der Leistung von Sekundärverbrauchern oder Abschalten von Sekundärverbrauchern minimiert wird.

14. System nach einem der vorhergehenden Ansprüche, **dadurch gekennzeichnet, dass** die Steuereinrichtung (17) so eingerichtet ist, dass diese die Zufuhr von Wärme zu einem Gargut (2) steuert.

## Claims

1. System with a food thermometer (1) and with a control device (17) for the food thermometer (1), which is capable of controlling the measurement of temperatures by the food thermometer (1), wherein the control device (17) is configured such that an interval (MI) between temperature measurements by the food thermometer (1) is controlled depending on the preparation of a food (2), **characterized in that** the control device (17) is configured such that following a switching-on of the food thermometer (1), the interval (MI) between temperature measurements is initially small during an initialization phase and the interval (MI) between temperature measurements after the initialization phase is larger, wherein during the initialization phase a radio connection is made between the control device (17) and the food thermometer (1).

2. System according to the preceding claim, **characterized in that** the control device (17) is configured such that the interval (MI) is increased during the supply of heat to a product to be cooked (2) following a starting phase by the control device (17).

3. System according to the preceding claim, **characterized in that** the control device (17) is configured such that the interval (MI) during the supply of heat to a product to be cooked (2) is finally decreased again by the control device (17) after the interval (MI) has been increased.

4. System according to one of the preceding claims, **characterized in that** the control device (17) is configured such that the interval (MI) during the supply of heat to a product to be cooked (2) is reduced towards the end of the cooking time by the control device (17).

5. System according to one of the preceding claims, **characterized in that** the control device (17) is configured such that during the preparation of a food a short interval (MI) is 1 to 10 seconds long and a large interval is 10 to 60 seconds long.

6. System according to one of the preceding claims, **characterized in that** the control device (17) is configured such that it defines an interval (MI) depending on a measured actual temperature and a desired temperature and/or start temperature.

7. System according to the preceding claim, **characterized in that** the control device (17) analyzes differences between measured actual temperature and start temperature and/or desired temperature and controls the size of the interval (MI) depending thereon.

8. System according to the preceding claim, **characterized in that** the control device (17) is configured such that it increases the interval (MI) when (Tᵢₛₜ - Tₛₜₐᵣₜ) ≥ (Tₛₒₗₗ - Tₛₜₐᵣₜ)/X and/or decreases the interval (MI) when (Tₛₒₗₗ - Tᵢₛₜ) ≤ (Tₛₒₗₗ - Tₛₜₐᵣₜ)/X, wherein Tᵢₛₜ is the actual temperature, Tₛₒₗₗ is the desired temperature, Tₛₜₐᵣₜ is a temperature in the product to be cooked prior to the supply of heat to the product to be cooked, and X is a number greater than 1.

9. System according to one of the preceding claims, **characterized in that** the control device (17) is configured such that it is able to access an electronically stored recipe and to extract a desired temperature from the electronically stored recipe.

10. System according to the preceding claim, **characterized in that** the control device (17) is configured such that it is able to access the electronically stored recipe and to extract one or more intervals from the electronically stored recipe.

11. System according to one of the preceding claims, **characterized in that** the control device (17) is configured such that the measurement of temperatures by the food thermometer (1) is terminated when a measured actual temperature is at least equal to a desired temperature determined by the control device (17).

12. System according to one of the preceding claims, **characterized in that** the control device (17) is configured such that it forms an average value from a plurality of temperature measurements for at least one temperature sensor (5, 6) of the food thermometer (1).

13. System according to one of the preceding claims, **characterized in that** the control device (17) is configured such that the energy consumption of the food thermometer (1) between two measurements is minimized by reducing the power of secondary consumers or switching off secondary consumers.

14. System according to one of the preceding claims, **characterized in that** the control device (17) is configured such that it controls the supply of heat to a product to be cooked (2).

## Revendications

1. Système avec un thermomètre pour aliments (1) et un dispositif de commande (17) pour le thermomètre pour aliments (1), qui peut commander la mesure de températures par le thermomètre pour aliments (1), dans lequel le dispositif de commande (17) est configuré de telle sorte qu'un écart (MI) entre des mesures de température par le thermomètre pour aliments (1) est commandé en fonction de la préparation d'un aliment (2), **caractérisé en ce que** le dispositif de commande (17) est configuré de telle sorte qu'à la suite d'une mise en marche du thermomètre pour aliments (1), l'écart (MI) entre les mesures de température est petit pendant une phase d'initialisation et l'écart (MI) entre les mesures de température est plus grand après la phase d'initialisation, dans lequel une liaison radio est établie entre le dispositif de commande (17) et le thermomètre pour aliments (1) pendant la phase d'initialisation.

2. Système selon la revendication précédente, **caractérisé en ce que** le dispositif de commande (17) est configuré de telle sorte que l'écart (MI) est augmenté par le dispositif de commande (17) pendant l'apport de chaleur à un aliment à cuire (2) à la suite d'une phase de démarrage.

3. Système selon la revendication précédente, **caractérisé en ce que** le dispositif de commande (17) est configuré de telle sorte que l'écart (MI) pendant l'apport de chaleur à un aliment à cuire (2) est finalement à nouveau réduit par le dispositif de commande (17) après l'augmentation de l'écart (MI).

4. Système selon l'une des revendications précédentes, **caractérisé en ce que** le dispositif de commande (17) est configuré de telle sorte que l'écart (MI) est réduit par le dispositif de commande (17) pendant l'apport de chaleur à un aliment à cuire (2) vers la fin du temps de cuisson.

5. Système selon l'une des revendications précédentes, **caractérisé en ce que** le dispositif de commande (17) est configuré de telle sorte que, pendant la préparation d'un aliment, une courte distance (MI) dure de 1 à 10 secondes et une grande distance dure de 10 à 60 secondes.

6. Système selon l'une des revendications précédentes, **caractérisé en ce que** le dispositif de commande (17) est configuré de telle sorte que celui-ci détermine une distance (MI) en fonction d'une température réelle mesurée ainsi que d'une température de consigne et/ou d'une température de démarrage.

7. Système selon la revendication précédente, **caractérisé en ce que** le dispositif de commande (17) analyse des différences entre la température réelle mesurée et la température de démarrage et/ou la température de consigne et commande la grandeur de l'écart (MI) en fonction de ça.

8. Système selon la revendication précédente, **caractérisé en ce que** le dispositif de commande (17) est configuré de telle sorte que celui-ci augmente l'écart (MI) lorsque (Tᵢₛₜ - Tₛₜₐᵣₜ) ≥ (Tₛₒₗₗ - Tₛₜₐᵣₜ) / X et/ou réduit l'écart (MI) lorsque (Tₛₒₗₗ - Tᵢₛₜ) ≤ (Tₛₒₗₗ - Tₛₜₐᵣₜ) / X, dans lequel Tᵢₛₜ est la température réelle, Tₛₒₗₗ est la température de consigne, Tₛₜₐᵣₜ est une température dans l'aliment à cuire avant l'apport de chaleur à l'aliment à cuire et X est un nombre supérieur à 1.

9. Système selon l'une des revendications précédentes, **caractérisé en ce que** le dispositif de commande (17) est configuré de telle sorte que celui-ci peut accéder à une recette sauvegardée électroniquement et peut extraire une température de consigne de la recette sauvegardée électroniquement.

10. Système selon la revendication précédente, **caractérisé en ce que** le dispositif de commande (17) est configuré de telle sorte que celui-ci peut accéder à la recette sauvegardée électroniquement et peut extraire un ou plusieurs écarts de la recette sauvegardée électroniquement.

11. Système selon l'une des revendications précédentes, **caractérisé en ce que** le dispositif de commande (17) est configuré de telle sorte que la mesure des températures par le thermomètre pour aliments est arrêtée (1) lorsqu'une température réelle mesurée est au moins égale à une température de consigne déterminée par le dispositif de commande (17).

12. Système selon l'une des revendications précédentes, **caractérisé en ce que** le dispositif de commande (17) est configuré de telle sorte que celui-ci forme une valeur moyenne à partir de plusieurs mesures de température pour au moins un capteur de température (5, 6) du thermomètre pour aliments (1).

13. Système selon l'une des revendications précédentes, **caractérisé en ce que** le dispositif de commande (17) est configuré de sorte que la consommation d'énergie du thermomètre pour aliments (1) entre deux mesures est minimisée par réduction de la puissance des consommateurs secondaires ou par arrêt des consommateurs secondaires.

14. Système selon l'une des revendications précédentes, **caractérisé en ce que** le dispositif de commande (17) est configuré de sorte que celui-ci commande l'apport de chaleur à un aliment à cuire (2).
